# EUROPEAN PATENT APPLICATION

(11) **EP 0 757 938 A2**
(43) Date of publication of application: **12.02.1997**
(21) Application number: 96303053.1
(22) Date of filing: 01.05.1996
(51) Int. Cl.: B32B 15/08, B32B 15/02

(54) **Damped laminated metal structure**

(30) Priority: 09.08.1995 US 512998
(71) Applicant: Roush Anatrol Inc., Sunnyvale, California 94086 (US)
(72) Inventor: Nashif, Ahid, Cincinnati, Ohio 45242 (US)
(74) Representative: Davies, Gregory Mark

(57) **Abstract**

A damped laminated metal structure includes a first sheet of material defining a first surface, a second sheet of material defining a second surface, a bonding material extending between the first surface and the second surface to bond the first sheet of material to the second sheet of material, and a plurality of reinforcements disposed in the bonding material between the first surface and the second surface to reduce effects of creep to a minimal extent and increase torque retention capabilities of the damped laminated metal structure.

## Description

The present invention relates generally to damped laminated structures and, more specifically, to laminated metal structures which damp noise and vibrations.

Laminated structures have been used to damp mechanical energies which are received thereby. The mechanical energy may be periodic, noise vibrations, or merely individual impulses of energy. Laminated metal structures include two sheets of metal that sandwich an adhesive bonding layer. When the laminated metal structures receive mechanical energy in the form of forces, the sheets of metal move with respect to each other. This relative movement creates shear in the adhesive layer which, in turn, generates heat. Therefore, the mechanical energy received by the laminated metal structure is converted into thermal energy which is dissipated over the surface area of the laminated metal structure.

A major concern associated with the laminated metal structures is creep. More specifically, creep, the time varying properties of structures under load, can reduce the damping potential of the laminated metal structure and cause other deteriorating effects. Most elastic materials demonstrate a minimal creep behavior when operated in their elastic range. The properties of the material tend to change rapidly with time when the material is operated out of its elastic range. The elastic range varies from material to material. The metal plates will experience minimum creep as their elastic range is very large and they usually operate in this range.

Adhesives are viscoelastic which exhibit both elastic and viscous behavior which causes them to creep or change properties with time under load. The time for the creep phenomenon to occur and minimize the effectiveness of the laminated metal structure is dependent on the strength, modulus and thickness of the adhesive. When creep occurs, the adhesive may be squeezed out and the two sheets of metal may contact each other which eliminates the damping properties of the laminated metal structure and is undesired.

Creep further minimizes the ability to retain a torque on the laminated metal structure. More specifically, fasteners which secure the laminated metal structure to base surfaces lose their torque when the two sheets of metal move closer together, effectively loosening the fasteners and allowing the laminated metal structure to move relative to the base surface. This changes a whole range of dynamic characteristics of the structure and the structure itself.

Another concern associated with laminates is the loss of stiffness compared to the original structure. Change in stiffness will alter the dynamic characteristics of the structure and produce some unpleasant results.

It is, therefore, one object of the present invention to provide a damped laminated metal structure with minimal creep and maximum torque retention capability.

It is another object of the present invention to provide additional strength to the adhesive layer to reduce creep and increase torque retention capability.

To achieve the foregoing objects, the present invention is a damped laminated metal structure including a first sheet of material defining a first surface and a second sheet of material defining a second surface. The damped laminated metal structure also includes a bonding material extending between the first surface and the second surface and bonding the first sheet of material to the second sheet of material. The damped laminated metal structure further includes a plurality of reinforcements disposed in the bonding material between the first surface and the second surface. The reinforcements provide for the mechanical fasteners between the surfaces to minimize the creep of the bonding material without keeping it from shearing which is required to dissipate vibrational energy.

One advantage of the present invention is that a damped laminated metal structure is provided with minimal creep and maximum torque retention capability. Another advantage of the present invention is that the damped laminated metal structure minimizes creep of the structure created by placement of the bonding material between the first and second sheets of material. Yet another advantage of the present invention is that reinforcements are added in the bonding material to maintain the distance between the first and second sheets of material and without limiting the shearing action of the bonding material, by doing so, maintain the damping capabilities of the structure.

Other objects, features and advantages of the present invention will be readily appreciated as the same becomes better understood after reading the subsequent description when considered in connection with the accompanying drawings, which describe the invention by way of example only.

FIG. 1 is a sectional view of a damped laminate metal structure according to the present invention.

FIG. 2 is an enlarged view of a portion of the damped laminated metal structure found in circle 2 of FIG. 1.

FIG. 3 is a view similar to FIG. 1 with forces applied to the damped laminated metal structure.

FIG. 4 is an enlarged view of a portion of the damped laminated metal structure found in circle 4 of FIG. 3.

FIG. 5 is a sectional view of the damped laminated metal structure secured to a base structure.

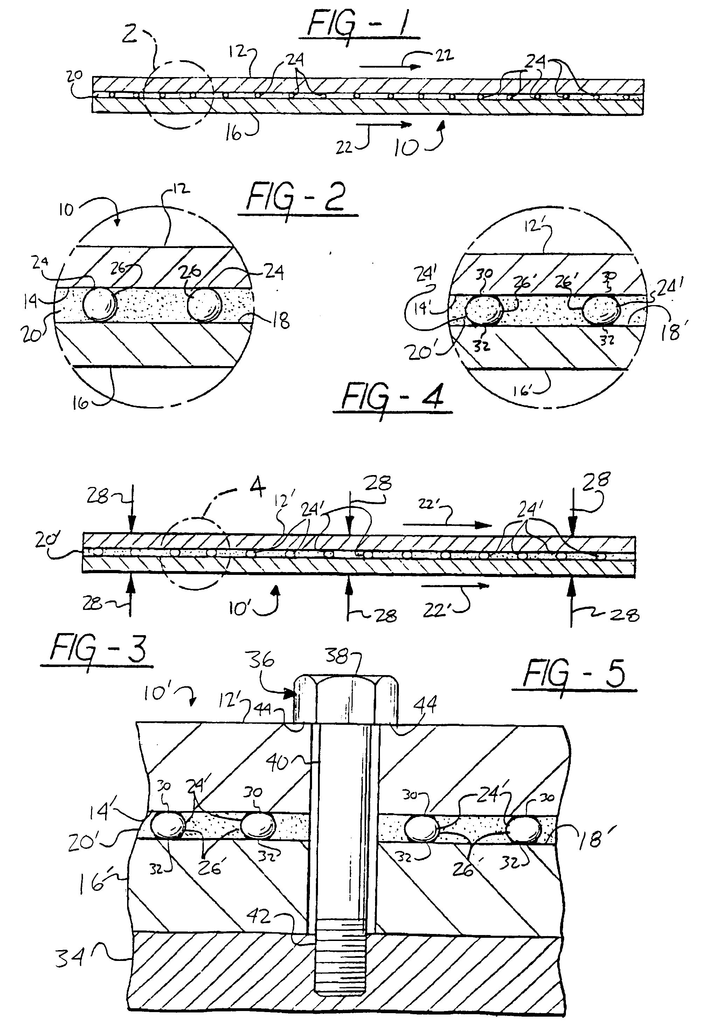

Referring to FIGS. 1 and 2, one embodiment of a damped laminated metal structure, according to the present invention, is generally shown at 10. The damped laminated metal structure 10 includes a first sheet of material 12. The first sheet of material 12 is a metal such as steel in one embodiment. The first sheet of material 12 defines a first surface 14 which is an interior surface. The first sheet of material 12 may define any surface suitable for the application of the damped laminated metal structure 10. More specifically, the first sheet of material 12 may be fit to a particular environment and, although shown in the FIG. 1, does not have to be planar.

The damped laminated metal structure 10 also includes a second sheet of material 16 defining a second surface 18. The second sheet of material 16 is a metal such as steel in one embodiment. The second sheet of material 16 has the same configuration as the first sheet of material 12. Likewise, the second surface 18 has the same configuration as the first surface 14.

The damped laminated metal structure 10 further includes a bonding material 20 extending between the first surface 14 and the second surface 18 of their respective sheets of material 12,16. The bonding material 20 has a uniform predefined thickness which is the separation distance between the first surface 14 and the second surface 18. The bonding material 20 is viscoelastic and is used to bond the first sheet of material 12 to the second sheet of material 16. Preferably, the bonding material 20 is a pressure sensitive adhesive. The bonding material 20 extends across the entire surface area of both the first surface 14 and the second surface 18. The bonding material 20 has a predetermined elasticity and converts mechanical energy due to forces 22 into heat. The forces 22 are created by mechanical energy in the form of impulse energy, noise energy and periodic vibration energy. The bonding material 20 converts the mechanical energy generated by forces 22 into thermal energy which is dissipated across the entire surface areas of the first sheet of material 12 and the second sheet of material 16.

Referring to FIG. 2, the damped laminated metal structure 10 includes a plurality of reinforcements 24 such as metal spheres disposed between the first surface and the second surface 18. The reinforcements 24 reduce the amount of energy received by the bonding material 20. With the forces 22 being partially absorbed by the reinforcements 24, the bonding material 20 absorbs energy created by the shearing motion of the first sheet of material 12 and the second sheet of material 16. The reinforcements 24 maintain the predetermined elasticity of the bonding material 20. It should be appreciated that the reinforcements 24 absorb the forces created by first sheet of material 12 and the second sheet of material 16.

In one embodiment, the reinforcements 24 are metal spheres fabricated from a hard metal material such as steel or brass having a density greater than a predetermined density of the bonding material 20. The reinforcements 24 have an outer surface 26 substantially spherical in shape. It should be appreciated that the metal spheres are by illustration only and that any suitable reinforcements may be with an outer surface having any suitable shape.

Referring to FIGS. 3 and 4, wherein liked primed numerals represent similar structure to that found in the embodiment of FIGS. 1 and 2, a damped laminated metal structure, according to the present invention, is generally indicated at 10'. In fabricating this embodiment of the damped laminated metal structure 10', compressive forces 28 in the form of pressure are forced down onto the first sheet of material 12' and the second sheet of material 16'. These forces 28 deform the reinforcements 24' such that the outer surfaces 26' of each of the reinforcements 24' include a first flat end 30 and a second flat end 32. The first flat ends 30 abut the first sheet of material 12' and the second flat ends 32 abut the second sheet of material 16'. The compression of the reinforcements 24' provides better contact with the surfaces 14 and 18. In order for the first sheet of material 12' to move vertically relative to the second sheet of material 16', forces must be great enough to overcome the edges in the outer surfaces 26' by the first flat ends 30 and the second flat ends 32 for the reinforcements 24' to roll and aid in the relative movement thereof.

Referring to FIG. 5, the damped laminated metal structure 10' is shown attached to a base structure 34. The base structure 34 may be any structural mount strong enough and suitable for securing the damped laminated metal structure 10' thereto. A fastener such as a screw, generally indicated at 36, secures the damped laminated metal structure 10' to the base structure 34. The fastener 36 includes a head 38, a body 40, and a threaded distal end 42. As should be appreciated by those skilled in the art, any creep in the bonding material 20' would reduce the width of the bonding material 20' which, in turn, would prevent the positive contacting of the damped laminated metal structure 10' to a lower surface 44 of the head 38 effectively loosening the fastener 36 from the base structure 34. If the fastener 36 loosens, the fastener 36 may vibrate itself loose which will minimize the effectiveness of the damped laminated metal structure 10' and may enhance the laminated metal received thereby. In particular, the damped laminated metal structure 10' may enhance the mechanical energy received thereby if the structure of the damped laminated metal structure 10' can maintain a harmonic wave of energy.

To fabricate the damped laminated metal structure 10, the first sheet of material 12 must be formed to a predetermined configuration as established by the environment in which the damped laminated metal structure 10 is to be installed. The second sheet of material 16 is to be formed in the predetermined configuration of the first sheet of material 12. The reinforcements 24 are added to the bonding material 20 in liquid form and cured to form a bonding layer. The bonding layer is disposed between the first and second sheets of material 12,16 and are passed through a laminator (not shown) where enough pressure is applied to effectively bond the first sheet of material 12 to the second sheet of material 16. It should be appreciated that the reinforcements 24 are randomly distributed throughout the bonding material 20 across the entire second surface 18.

Specifically, referring to the damped laminated metal structure 10', the method includes the step of creating a first flat end 30 and a second flat end 32 on each of the reinforcements 24'. Compression forces 28 placed on the first sheet material 12' and the second sheet of material 16' force the compression of the reinforcements 24' to create the first flat ends 30 and the second flat ends 32 on the outer surface 26' of the reinforcements 24'.

The present invention has been described in an illustrative manner. It is to be understood that the terminology which has been used is intended to be in the nature of words of description rather than of limitation.

Many modifications and variations of the present invention are possible in light of the above teachings. Therefore, within the scope of the appended claims, the present invention may be practiced otherwise than as specifically described.

## Claims

1. A damped laminated metal structure comprising:
a first sheet of material defining a first surface;
a second sheet of material defining a second surface;
a bonding material extending between said first surface and said second surface to bond said first sheet of material to said second sheet of material; and
a plurality of reinforcements disposed in said bonding material and between said first surface and said second surface to reduce effects of creep to a minimal extent and increase torque retention capabilities of said damped laminated metal structure.

2. A damped laminated metal structure as set forth in claim 1, wherein said reinforcements are fabricated from a hard material having a stiffness and density greater than a predetermined stiffness and density of said bonding material.

3. A damped laminated metal structure as set forth in claim 1 or claim 2, wherein said reinforcements are fabricated from a high density material.

4. A damped laminated metal structure as set forth in any of claims 1 to 3, wherein each of said reinforcements comprises a respective outer surface including a first flat end and a second flat end, said first flat end abutting said first sheet of material and said second flat end abutting said second sheet of material.

5. A damped laminated metal structure as set forth in any preceding claim, wherein said first sheet of material is fabricated from a metal.

6. A damped laminated metal structure as set forth in any preceding claim, wherein said second sheet of material is fabricated from a metal; and/or
wherein said bonding material is fabricated from a viscoelastic material.

7. A damped laminated metal structure as set forth in any preceding claim, wherein said reinforcements comprise a plurality of metal spheres disposed between said first surface and said second surface to maintain a predetermined spacing for said bonding material.

8. A damped laminated metal structure comprising:
a first sheet of metal defining a first surface;
a second sheet of metal defining a second surface;
a viscoelastic material extending between said first surface and said second surface to bond said first sheet of metal to said second sheet of metal in spaced relation thereto, said viscoelastic material having a uniform predefined thickness and a predetermined viscoelasticity; and
a plurality of metal spheres disposed in said viscoelastic material between said first surface and said second surface, said metal spheres extending across said uniform predefined thickness and having a first flat end abutting said first surface and a second flat end abutting said second surface such that said metal spheres maintain a predetermined spacing for said viscoelastic material to reduce effects of creep to a minimal extent and increase torque retention capabilities of said metal laminate damping structure.

9. A method for fabricating a damped laminated metal structure, the method comprising the steps of:
forming a first sheet of material to a predetermined configuration;
forming a second sheet of material to the predetermined configuration;
adding reinforcements to a bonding material in a liquid form and curing the bonding material to form a bonding layer; and
laminating the first sheet of material, bonding layer and second sheet of material together.

10. A method as set forth in claim 9, including the step of creating a first flat end and a second flat end on each of the reinforcements, preferably by means of a step of applying a force to the first and second sheets of material to create the first and second flat ends on the reinforcements.
